# EUROPÄISCHE PATENTSCHRIFT

(11) **EP 2 464 908 B1**
(45) Veröffentlichungstag und Bekanntmachung des Hinweises auf die Patenterteilung: **21.03.2018**
(21) Anmeldenummer: 10740119.2
(22) Anmeldetag: 14.07.2010
(51) Int. Cl.: F16L 13/14, B21D 39/04, E21B 7/20, E21B 17/04, E21B 17/08

(54) **HÜLLROHRVERBINDUNG**
JACKET PIPE CONNECTION
RACCORD DE TUYAUX DE GAINAGE

(30) Priorität: 12.08.2009 AT 50509 U
(43) Veröffentlichungstag der Anmeldung: 20.06.2012
(73) Patentinhaber: Dywidag-Systems International GmbH, 4061 Pasching (AT)
(72) Erfinder: BÖHM, Karl, A-4615 Holzhausen (AT); KARPELLUS, Walter, A-6020 Innsbruck (AT)
(74) Vertreter: Cunow, Gerda
(86) Internationale Anmeldenummer: PCT/AT2010/000262
(87) Internationale Veröffentlichungsnummer: WO 2011/017723

(56) Entgegenhaltungen:
- EP-A2- 0 747 620
- DE-U1- 9 419 865
- US-A- 3 528 689
- US-A- 4 257 155
- US-A- 4 903 995

## Beschreibung

Die vorliegende Erfindung bezieht sich auf eine Rohrverbindung zwischen einem ersten Rohr und einem zweiten Rohr, wobei ein Endabschnitt des einen Rohrs als Spitzende ausgebildet ist und von einem als Muffenende ausgebildeten Endabschnitt des anderen Rohrs übergriffen ist, wobei das Spitzende einen gegenüber dem Rohrumfang verringerten Durchmesser aufweist.

Rohrverbindungen zwischen einem ersten Rohr und einem zweiten Rohr sind in den unterschiedlichsten Ausführungsformen bekannt, wobei sowohl lösbare Verbindungen als auch dauerhafte Verbindungen vielfältig eingesetzt sind. Im Falle von lösbaren Verbindungen wird beispielsweise ein Verschrauben von Rohren mittels Gewinden entweder direkt oder unter Zuhilfenahme einer Muffe in der Praxis eingesetzt. Im Falle von dauerhaften Verbindungen wird für die Herstellung der Verbindung ein Verkleben, Verschweißen oder Vernieten eingesetzt. Derartige dauerhafte Verbindungen können üblicherweise ohne Zerstörung der Endabschnitte der miteinander verbundenen Rohre nicht mehr gelöst werden.

Insbesondere im Bergbaubereich ist es bekannt, beim Bohren von Löchern in Boden- und Gesteinsmaterial das Bohrgestänge von sogenannten Hüllrohren zu umgeben, welche gleichzeitig mit dem Bohrgestänge eingeschlagen bzw. mit diesem mitgezogen werden können. Bis dato ist es üblich, beim Verlängern von derartigen Hüllrohren entweder die Hüllrohrenden direkt miteinander zu verschrauben oder eine Schraubmuffe über miteinander zu verbindenden Hüllrohrenden anzubringen. Ein derartiges Verbinden mittels Gewinden ist einerseits technisch aufwendig und andererseits kostenintensiv, da in die Rohrenden entsprechende Gewinde geschnitten werden müssen, welche in der Folge exakt verschraubt werden müssen, um ein Verkeilen bzw. Verklemmen der Rohrenden und somit ein Unbrauchbarmachen derselben mit Sicherheit zu vermeiden. Darüber hinaus sind Gewindeverbindungen vollständig starr, was insbesondere beim Einsatz im Bergbau nachteilig sein kann.

Aus der WO 2005/103547 ist eine Rohrverbindung bekannt geworden, bei welcher zwei Rohre ineinander bis zu einem in den jeweiligen Rohrenden vorgesehenen Anschlag ineinander eingeschoben werden, worauf durch Aufbringen einer Presskraft das als Muffenende ausgebildete Rohrende auf das als Spitzende ausgebildete Rohrende aufgepresst wird. Um eine unverschiebliche Verbindung zu erzielen, ist hiebei in dem als Spitzende ausgebildeten Rohrende eine Mehrzahl von in Umfangsrichtung verlaufenden und in Rohrlängsrichtung voneinander beabstandeten Vertiefungen vorgesehen.

Der US 4 257 155 ist eine Rohrverbindung ohne Gewinde zwischen zwei metallischen Rohren entnehmbar, bei welcher zur Erzielung einer starren Verbindung das Muffenende eines Rohrs auf das Spitzende eines anderen Rohrs durch Aufbringen eines Pressdrucks aufgepresst wird.

Der US 4 903 995 ist eine flexible Verbindung von zwei elastischen bzw. bewegbaren Rohren, wie beispielsweise Kunststoffschläuchen entnehmbar, welche durch Festlegung eines Schlauchs an einem Adapterteil unter Verwendung einer selbstdichtenden Muffe erzielbar ist.

Der DE-U 94 19 865.9 ist eine starre Rohrverbindung zwischen einem Muffenende eines Rohrs und dem Spitzende eines anderen Rohrs entnehmbar, bei welchem das Spitzende eine Mehrzahl von Vorsprüngen aufweist, um eine sichere und zuverlässige Verbindung der zwei Rohrabschnitte zur Verfügung zu stellen.

Der EP 0 747 620 ist ein Verfahren zur Herstellung einer Kupplungsvorrichtung, welche zwei Rohre miteinander verbinden soll, entnehmbar, wobei die Kupplungsvorrichtung eine Muffe, welche über die freien Rohrenden der zwei zueinander verbindenden Rohre aufzuschieben ist, darstellt.

Insbesondere bei der Herstellung von Verankerungen bzw. Rohrschirmen zur Herstellung von Tunnels oder Durchtritten in Boden- oder Gesteinsmaterial ist häufig eine große Länge von derartigen Verankerungen oder Rohrschirmen für eine ordnungsgemäße Sicherung erforderlich. Weiters ist bei der Herstellung von derartigen Verankerungen oder Rohrschirmen davon auszugehen, dass beispielsweise aufgrund von unterschiedlichem Boden- oder Gesteinsmaterial teilweise Verschiebungen zwischen einzelnen Boden- oder Gesteinsschichten auftreten können, welche eine Beanspruchung der Verankerungen bzw. der Elemente von Rohrschirmen abweichend von der Längserstreckung von derartigen rohrförmigen Elementen, insbesondere quer oder geneigt zur Längserstreckung bewirken können. Falls eine derartige von der Längserstreckung abweichende Beanspruchung des rohrförmigen Elements bzw. Rohrs auftritt, kann insbesondere in dem Fall, dass die miteinander zu verbindenden Rohre bzw. Rohrenden starr miteinander verbunden sind, eine Beschädigung der Verbindung bzw. ein Knicken des Rohrs oder auch ein Einschneiden eines innen liegenden scharfkantigen Endabschnitts eines als Spitzende ausgebildeten Rohrs in den umgebenden Endabschnitt des anderen Rohrs auftreten, so dass insbesondere im Bereich der Verbindung der beiden Rohre miteinander eine entsprechende Festigkeit bzw. Unversehrtheit der Rohrverbindung nicht mehr gegeben ist, wodurch die mit derartigen Rohren zu erzielende Sicherung nicht mehr gegeben bzw. nicht mehr ausreichend gegeben ist.

Die vorliegende Erfindung zielt nun darauf ab, eine Rohrverbindung zur Verfügung zu stellen, welche einerseits rasch und zuverlässig sowie ohne großen Aufwand hergestellt werden kann und andererseits in der Lage ist, den häufig in Boden- oder Gesteinsmaterial auftretenden Verschiebungen zwischen einzelnen Boden- oder Gesteinsschichten ohne Beeinträchtigung der Rohrverbindung folgen zu können bzw. sich an diese anzupassen.

Zur Lösung dieser Aufgabe ist die vorliegende Erfindung dadurch gekennzeichnet, dass an dem vom Rohrende abgewandten Endbereich des Spitzendes eine sich wenigstens über einen Teilbereich des Umfangs des Spitzendes erstreckende Vertiefung ausgebildet ist, dass das in das Muffenende des anderen Rohrs ragende Spitzende des einen Rohrs einen sich konisch verjüngenden Endabschnitt aufweist, dass der sich konisch verjüngende freie Endabschnitt des Spitzendes des einen Rohrs einen Konuswinkel von 0,8 bis 1,5° aufweist, und dass ein von dem freien Ende des Spitzenendes abgewandter Schenkel der Vertiefung als Anschlag für das freie Ende des als Muffenende ausgebildeten Endabschnitts des anderen Rohrs ausgebildet ist. Dadurch, dass der Endbereich des Spitzendes eine sich wenigstens über einen Teilbereich des Umfangs des Spitzendes erstreckende Vertiefung aufweist, gelingt es, eine Rohrverbindung zu schaffen, welche lediglich durch Eindrücken des als Muffenende ausgebildeten Rohrendes in die Vertiefung gebildet ist. Eine derartige Rohrverbindung weist aufgrund ihrer äußerst geringen Erstreckung in Rohrlängsrichtung eine gewisse Flexibilität dahingehend auf, dass es möglich ist, Verschiebungen in dem Boden- oder Gesteinsmaterial zu folgen bzw. in einem gewissen Ausmaß ein Knicken des gesamten Rohrs im Bereich der Rohrverbindung zuzulassen, ohne dass die Rohrverbindung oder eines der Rohre beschädigt wird. Indem weiterhin ein von dem freien Ende des Spitzendes abgewandter Schenkel der Vertiefung als Anschlag für das freie Ende des als Muffenende ausgebildeten Endabschnitts des anderen Rohrs ausgebildet ist, gelingt es sicherzustellen, dass das als Spitzende ausgebildete Rohr nur bis zu einer vorbestimmten Eindringtiefe in das Muffenende eingeschoben werden kann, da bei einem Anschlagen des Muffenendes an dem von dem freien Ende des Spitzendes abgewandten Schenkel der Vertiefung ein weiteres Einschieben des Spitzendes in das Muffenende verhindert ist. Darüber hinaus wird durch eine derartige Ausbildung sichergestellt, dass eine gewisse Beweglichkeit der Verbindung in Bezug auf die Längserstreckung des Rohrs möglich ist, so dass Verschiebungen zwischen einzelnen Boden- und Gesteinsschichten während des Einbringens eines langen Rohrs in das Boden- oder Gesteinsmaterial sicher und insbesondere beschädigungsfrei gefolgt werden kann.

Für eine weitere Verbesserung der Beweglichkeit der Rohrverbindung und insbesondere der beiden miteinander verbundenen Rohrteile zueinander in Bezug auf die Längsachse des Rohrs und zusätzlich für ein sicheres, zuverlässiges und einfaches Einführen des Spitzendes des einen Rohrs in das Muffenende des anderen Rohrs weist das Spitzende des einen Rohrs einen sich konisch verjüngenden freien Endabschnitt auf und zusätzlich weist der sich konisch verjüngende freie Endabschnitt des Spitzendes des einen Rohrs einen Konuswinkel von 0,8 bis 1,5° auf. Indem das Spitzende des einen Rohrs einen sich konisch verjüngenden Endabschnitt aufweist und zusätzlich der sich konisch verjüngende, freie Endabschnitt einen Konuswinkel von 0,8 bis etwa 1,5° aufweist, gelingt einerseits ein einfaches Einführen des Spitzendes des einen Rohrs in das Muffenende des anderen Rohrs und andererseits kann die gewünschte Anpassbarkeit einer Verbindung von aneinander anschließenden Rohren an Verschiebungen bzw. Verlagerungen zwischen einzelnen Boden- oder Gesteinsschichten noch besser gewährleistet werden.

Zur Ausbildung einer sicheren und zuverlässigen Verbindung zwischen den zwei Rohrenden ist die Erfindung dahingehend weitergebildet, dass die Vertiefung als symmetrische oder asymmetrische U-förmige oder symmetrische oder asymmetrische V-förmige Vertiefung ausgebildet ist. Indem die Vertiefung als symmetrische oder asymmetrische U- oder V-förmige Vertiefung ausgebildet ist, gelingt es, das freie Ende des als Muffenende ausgebildeten Rohrs sicher und zuverlässig in die Vertiefung einzupressen und somit einen dauerhaften Halt des Muffenendes in der Vertiefung sicherzustellen. Besonders gut haltbare und dauerhafte Verbindungen können dadurch hergestellt werden, dass die symmetrisch oder asymmetrisch ausgebildeten U- oder V-förmigen Vertiefungen jeweils ohne abgerundete Bereiche bzw. Bodenflächen ausgebildet sind, sondern winkelig aneinander angeschlossen sind, wodurch ein insbesondere fester Eingriff des Muffenendes sichergestellt werden kann.

Um eine besonders standfeste und präzise Rohrverbindung zu erzielen ist die Erfindung dahingehend weitergebildet, dass die Schenkel der symmetrischen oder asymmetrischen, U-förmigen Vertiefung mit der Basis der U-förmigen Vertiefung jeweils einen stumpfen Winkel einschließen oder die Schenkel der symmetrischen oder asymmetrischen V-förmigen Vertiefung einen stumpfen Winkel miteinander einschließen. Durch Ausbilden eines stumpfen Winkels einerseits zwischen den Schenkeln und der Basis einer symmetrischen oder asymmetrischen U-förmigen Vertiefung bzw. andererseits eines stumpfen Winkels zwischen den Schenkeln der V-förmigen Vertiefung gelingt es sowohl, einen sicheren Halt des Muffenendes in der Vertiefung zu erzielen als auch gleichzeitig zu gewährleisten, dass es zu keiner Beschädigung des Muffenendes im Bereich der Verbindung kommt, so dass ein Reißen bzw. unbeabsichtigtes Lösen der Rohrverbindung mit Sicherheit hintangehalten ist.

Zur Vereinfachung der Verbindung und insbesondere um einen Materialbruch oder eine Zerstörung des freien Endabschnitts des Muffenendes mit Sicherheit hintanzuhalten, ist die Erfindung dahingehend weitergebildet, dass der als Muffenende ausgebildete Endabschnitt des anderen Rohrs wenigstens eine, insbesondere zwei Sollbiegestelle(n) aufweist. Durch Vorsehen von wenigstens einer Sollbiegestelle gelingt es, den als Muffenende ausgebildeten Endabschnitt des anderen Rohrs in die Vertiefung des als Spitzende ausgebildeten Rohrs sicher und zuverlässig einzupressen, ohne dass es zu einer Materialzerstörung bzw. zu Brüchen oder Rissen in dem Material des Muffenendes kommt, so dass eine sichere und belastungsbeständige Rohrverbindung zur Verfügung gestellt werden kann. Indem, wie dies einer Weiterbildung der Erfindung entspricht, die Sollbiegestelle als Materialverjüngung, Nuten, Rillen oder dgl. ausgebildet ist, gelingt es, eine exakte Anpassung des Muffenendes an die Vertiefung sicherzustellen, wobei insbesondere die oben erwähnten Nachteile eines Reißens des Materials oder Brechens des Muffenendes ausgeschlossen sind.

Für eine besonders exakte Anlage des als Muffenende ausgebildeten Endabschnitts des anderen Rohrs in der Vertiefung des als Spitzende ausgebildeten Rohrs nach der Verpressung ist die Erfindung dahingehend weitergebildet, dass wenigstens eine Sollbiegestelle am Innenumfang des als Muffenende ausgebildeten Endabschnitts des anderen Rohrs ausgebildet ist und dass die wenigstens eine Sollbiegestelle um den mittleren Durchmesser der Vertiefung von dem freien Ende des Muffenendes beabstandet ist. Dadurch, dass die Sollbiegestelle am Innenumfang des als Muffenende ausgebildeten Rohrs um den mittleren Durchmesser der Vertiefung von dem freien Ende des Muffenendes beabstandet ist, wird aufgrund der exakten Positionierung des freien Endes des Muffenendes eine sichere und zuverlässige Rohrverbindung zwischen den beiden zu verbindenden Rohren hergestellt und zusätzlich wird sichergestellt, dass da die maximal mögliche Länge eines Muffenendes in die Vertiefung eingepresst wird, die maximal mögliche Kontaktfläche zwischen den zu verbindenden Rohren erzielt wird, wodurch eine derartige Rohrverbindung auch extremen Belastungen standhält.

Insbesondere bei Ausbildung der Vertiefung als U-förmige Vertiefung kann eine weitere Verbesserung des Halts des Muffenendes in dem Spitzende dadurch erzielt werden, dass wenigstens eine weitere Sollbiegestelle an einem Außenumfang des als Muffenende ausgebildeten Endabschnitts des anderen Rohrs ausgebildet ist und dass diese weitere wenigstens eine Sollbiegestelle in Richtung zum freien Ende des Muffenendes versetzt von der wenigstens einen ersten Sollbiegestelle ausgebildet ist. Durch das Vorsehen einer weiteren Sollbiegestelle gelingt es, das freie Ende des als Muffenende ausgebildeten Rohrs vollständig an die Innenkontur der Vertiefung anzupassen und in diese einzupressen, so dass nicht nur ein sicherer und zuverlässiger Halt zur Verfügung gestellt wird, sondern mit welchem gleichzeitig sichergestellt werden kann, dass eine ausreichende Beweglichkeit der beiden miteinander verbundenen Rohre zur Anpassung an Verschiebungen in dem Boden- und Gesteinsmaterial gewährleistet werden kann.

Weiterhin wird eine Vorrichtung zur Ausbildung einer wie oben beschriebenen Rohrverbindung beschrieben, mit welcher sicher und zuverlässig ohne große Änderungen an bestehenden Vorrichtungen zum Bohren von Löchern in Boden- oder Gesteinsmaterial eine zuverlässige sowie insbesondre an Verschiebungen des Boden- und Gesteinsmaterials anpassbare Rohrverbindung zu Verfügung gestellt werden kann.

Eine derartige Vorrichtung weist eine Pressvorrichtung zum Einpressen des freien Endes des als Muffenende ausgebildeten Rohrabschnitts durch Aufbringen eines Pressdrucks, insbesondere eines radial zum Rohrinneren gerichteten Pressdrucks, in die Vertiefung des als Spitzende ausgebildeten Rohrabschnitts des anderen Rohrs aus einem Presselement und einer Vorrichtung zum Aufbringen eines Pressdrucks auf des Presselement auf, das Presselement ist eine mit einem Presskegel versehene Spreizhülse. Die Vorrichtung zum Aufbringen des Pressdrucks auf das Presselement ist aus einem Hydraulikzylinder gebildet, und ein mit dem Hydraulikzylinder zusammenwirkender und/oder daran festgelegter Presskeil wirkt auf das federnd gelagerte Presselement bzw. als Spreizhülse ausgebildetes Presselement. Dadurch, dass eine Pressvorrichtung zum Einpressen des freien Endes des als Muffenende ausgebildeten Rohrabschnitts durch Aufbringen eines Pressdrucks, insbesondere eines radial zum Rohrinneren gerichteten Pressdrucks, in die Vertiefung des als Spitzende ausgebildeten Rohrabschnitts des anderen Rohrs aus einem Presselement und einer Vorrichtung zum Aufbringen eines Pressdrucks auf des Presselement besteht, gelingt es einerseits im Bergbau bestehenden Vorrichtungen, mit welchen beispielsweise Gewindeverbindungen zwischen Rohren hergestellt werden, einfach zu adaptieren, indem statt der bekannten Vorrichtung, welche hydraulisch die Rohre miteinander verschraubt, ein Presselement und eine Vorrichtung zum Aufbringen eines Pressdrucks auf des Presselement zur Verfügung gestellt werden, welche gezielt positioniert einen radial zum Rohrinneren gerichteten Pressdruck auf das als Muffenende ausgebildete Rohr aufbringen.

Indem das Presselement eine mit einem Presskegel versehene Spreizhülse ist, wird einerseits ein einfaches und zerstörungsfreies Einführen der beiden Rohre ineinander und andererseits des freien Endes des als Muffenende ausgebildeten Rohrs in die Pressvorrichtung dadurch sichergestellt, dass während des Einführvorgangs die Spreizhülse so weit aufgeweitet wird, so dass das freie Ende des als Muffenende ausgebildeten Rohrs sicher und zuverlässig in die Pressvorrichtung eingebracht werden kann.

Indem weiterhin die Vorrichtung zum Aufbringen des Pressdrucks auf das Presselement aus einem Hydraulikzylinder gebildet ist, können einerseits bestehende hydraulische Vorrichtungen adaptiert werden und andererseits gelingt es durch gezielte Wahl des erforderlichen Drucks auf die zu verbindenden Rohre jegliche gegebenenfalls mögliche Beschädigung während der Herstellung der Verbindung zu vermeiden.

Indem ein mit einem hydraulischen Hohlzylinder zusammenwirkender und/oder daran festgelegter Presskeil auf das Presselement bzw. das als Spreizhülse ausgebildete Presselement wirkt, gelingt es lediglich durch Verschieben der Zylinderstange des hydraulischen Hohlzylinders und gleichzeitiges Verschieben des damit zusammenwirkenden Presskeils und/oder des daran festgelegten Presskeils in Richtung zu den freien Enden der miteinander zu verbindenden Rohre, die für das Einpressen des freien Endes des als Muffenende ausgebildeten Rohrs in die in dem Spitzende ausgebildete Vertiefung erforderliche Kraft sicher und zuverlässig aufzubringen, um das freie Ende des als Muffenende ausgebildeten Rohrs in die Vertiefung des als Spitzende ausgebildeten Rohrs einzudrücken.

Indem die Führungs- und Justiervorrichtung einen Hub bzw. einen Verschiebeweg entsprechend einer Eindringtiefe des als Spitzende ausgebildeten Rohrabschnitts in den als Muffenende ausgebildeten Rohrabschnitt aufweist, wird sichergestellt, dass einerseits das Spitzende exakt bis zum Anschlag des freien Endes des Muffenendes an dem vom Rohrende abgewandten Endbereich des Spitzendes abgewandten Schenkel der Vertiefung eingeführt wird, wodurch eine für eine zuverlässige Rohrverbindung erforderliche exakte Positionierung der beiden Rohre zueinander sichergestellt ist.

Indem die Vorrichtung zum Aufbringen des Pressdrucks auf das Presselement aus einem doppelt wirkenden Hydraulikzylinder gebildet ist, können einerseits bestehende hydraulische Vorrichtungen adaptiert werden und andererseits gelingt es durch gezielte Wahl des erforderliche Drucks auf die zu verbindenden Rohre jegliche gegebenenfalls mögliche Beschädigung während der Herstellung der Verbindung zu vermeiden.

Mit einer derartigen Vorrichtung gelingt es somit ohne große bauliche Veränderung von gängigen Vorrichtungen sicher und zuverlässig eine Rohrverbindung gemäß der vorliegenden Erfindung durch Einpressen des freien Endes eines als Muffenende ausgebildeten Rohrs in eine Vertiefung eines als Spitzende ausgebildeten Rohrabschnitts einzubringen.

Die Erfindung wird nachfolgend anhand von in der Zeichnung dargestellten Ausführungsbeispielen näher erläutert. In dieser zeigen:
Fig. 1 einen schematischen Längsschnitt durch eine Rohrverbindung gemäß der vorliegenden Erfindung,
Fig. 2 einen Längsschnitt durch eine schematische Darstellung von zwei miteinander zu verbindenden Rohren sowie durch die Vorrichtung zum Verbinden der Rohre in der Betriebsposition, in welcher die Rohre noch nicht miteinander verbunden sind,
Fig. 3 eine analoge Darstellung zu Fig. 2, wobei die Betriebsposition der Vorrichtung dargestellt ist, in welcher die beiden Rohre bereits miteinander verbunden sind,
Fig. 4 einen Längsschnitt durch eine abgewandelte Variante einer Vorrichtung zum Verbinden von zwei Rohrabschnitten,
Fig. 5 eine weitere abgewandelte Variante einer Vorrichtung zum Verbinden von zwei miteinander zu verbindenden Rohrabschnitten, und
Fig. 6 eine schematische Teilansicht des Presskegels sowie der miteinander zu verbindenden Rohrenden.

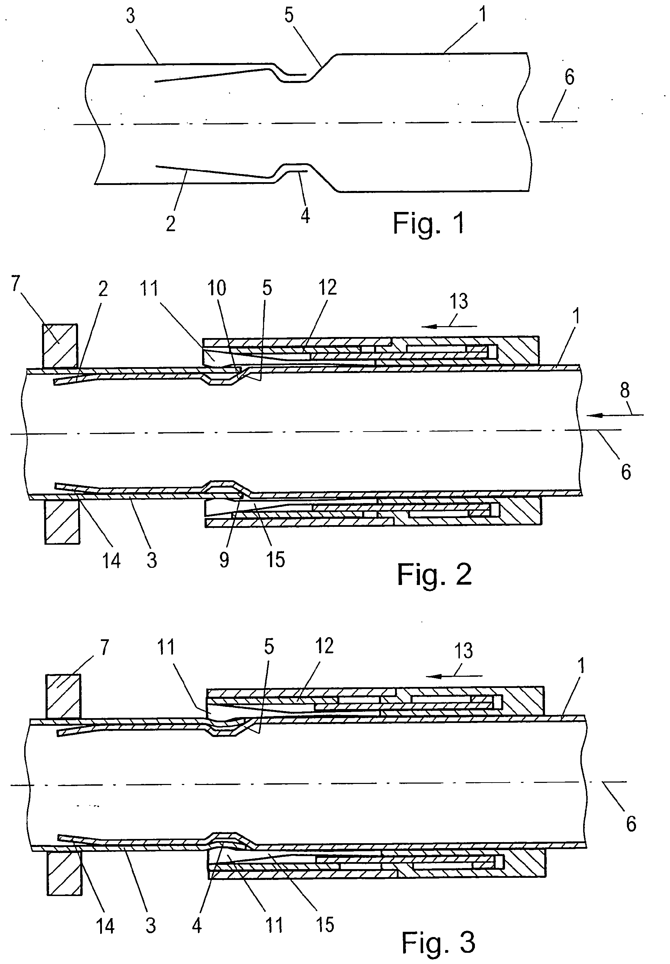

Im Einzelnen ist in Fig. 1 eine Rohrverbindung gemäß der vorliegenden Erfindung dargestellt, in welcher ein erstes Rohr 1, welches einen als Spitzende 2 ausgebildeten Endabschnitt aufweist, in ein zweites Rohr 3 eingeschoben ist, welches Rohrs 3 einen als Muffenende ausgebildeten Endabschnitt aufweist. Das freie Ende 4 des als Muffenende ausgebildeten Endabschnitts des Rohrs 3 ist hierbei in eine Vertiefung 5 des als Spitzende 2 ausgebildeten Endabschnitts des Rohrs 1 eingepresst. Durch ein derartiges Einpressen des freien Endabschnitts 4 des als Muffenende ausgebildeten Rohrs 3 in die Vertiefung 5 des als Spitzende 2 ausgebildeten Rohrs 1 wird eine sowohl auf Zug als auch auf Druck beanspruchbare Verbindung der beiden Rohre erzielt. Indem weiters der als Spitzende 2 ausgebildete Rohrabschnitt sich konisch verjüngend ausgebildet ist, ist gleichzeitig eine gewisse Bewegung der beiden Rohre 1 und 3 in Bezug auf die Längserstreckung der Rohre möglich, so dass sich die Rohrverbindung an beispielsweise Verschiebungen im Boden- und Gesteinsmaterial bei Einbringen der Rohrverbindung in dasselbe anpassen kann. Eine Auslenkung des Rohrs 1 gegenüber der Längsachse 6 der Rohrverbindung um den Konuswinkel, ist bei einer derartigen Rohrverbindung zerstörungs- und beschädigungsfrei möglich.

In Fig. 2 ist schematisch ein Längsschnitt durch zwei miteinander zu verbindende Rohre sowie durch eine Ausführungsform einer Vorrichtung zum Verbinden der Rohre dargestellt. Das das Muffenende aufweisende Rohr 3, welches das bergseitige Rohr darstellt, ist durch eine schematisch mit 7 dargestellte Haltevorrichtung gehalten und das ein Spitzende 2 aufweisende Rohr 1 wird in Richtung des Pfeils 8 so weit in das Rohr 3 eingeschoben, bis das freie Ende 9 des Rohrs 3 an dem von dem Spitzende 2 abgewandten Schenkel 10 der Vertiefung 5 anschlägt. Für dieses Einführen wird das freie Ende 9 des Rohrs 3 unter den federbelasteten Presskegel 11 geführt, worauf zur Herstellung der Rohrverbindung der doppelt wirkende Zylinder 12 betätigt wird und in Richtung des Pfeils 13 in seine, in Fig.3 dargestellte, Endstellung verschoben wird, wodurch der Presskegel 11 Druck auf den Endabschnitt 4 des Rohrs 3 ausübt und diesen in die Vertiefung 5 presst.

In Fig. 3 ist die Position der Verpressvorrichtung gemäß Fig. 2 dargestellt, in welcher der freie Endabschnitt 4 des Rohrs in die Vertiefung 5 eingepresst ist. In der Darstellung gemäß Fig. 3 ist der doppelt wirkende Zylinder 12 so weit in Richtung des Pfeils 13 verfahren, dass der maximale Pressdruck auf den Presskegel 11 wirkt. In Fig. 2 und 3 ist eine Ausführungsform des Rohrs 1 dargestellt, in welcher das Spitzende 2 des Rohrs 1 lediglich im Bereich seines freien Endes 14 sich konisch verjüngend ausgebildet ist, um das freie Ende 14 des Spitzendes 2 leichter in das Rohr 3, welches das Muffenende ausbildet, einführen zu können. Der größte Teil der Längserstreckung des Spitzendes 2 liegt bei Ausführungsformen der Fig. 2 und 3 dicht an dem Rohr 3 an, so dass bei einer Rohrverbindung gemäß Fig. 2 und 3 nur eine geringfügige Bewegung der Rohre zueinander bzw. eine geringfügige Bewegung in Bezug auf die Achse 6 ermöglicht ist.

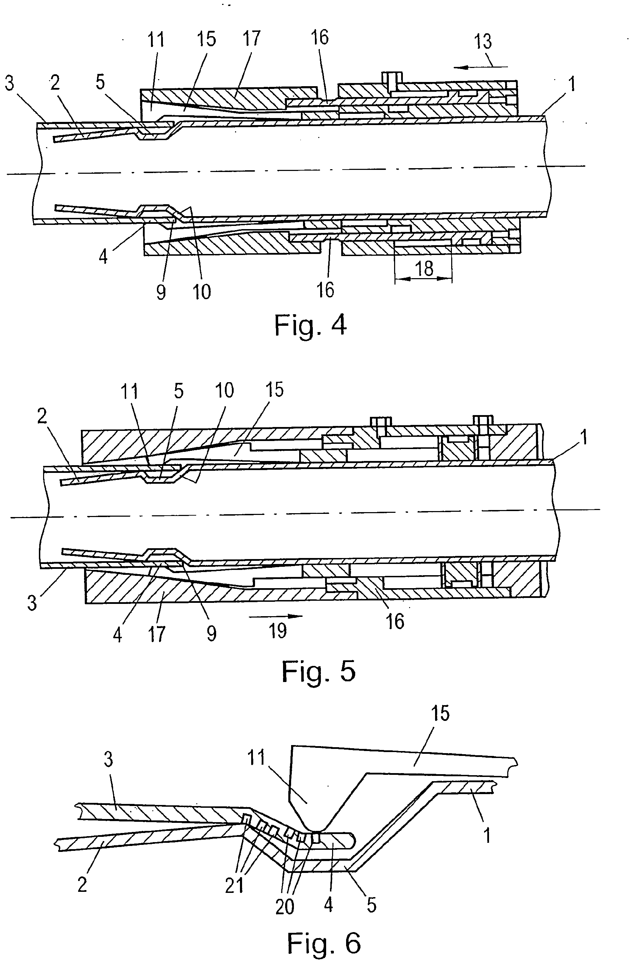

In Fig. 4 ist eine abgewandelte Variante einer Vorrichtung zum Verpressen der Rohre 1 und 3 dargestellt, wobei bei der Vorrichtung gemäß Fig. 4 der Zustand vor dem Einpressen des Endabschnitts 4 in die Vertiefung 5 dargestellt ist. Bei der Darstellung gemäß Fig. 4, bei welcher die Bezugszeichen beibehalten sind, ist wiederum eine den Presskegel 11 aufweisende Spreizhülse 15 dargestellt, in welche der freie Endabschnitt 4 des Rohrs 3 so weit eingeschoben ist, bis das freie Ende 9 des Rohrs 3 in Anschlag an den Schenkel 10 der Vertiefung 5 gelangt. Um auf die Spreizhülse 15 und somit den Presskegel 11 den erforderlichen Druck zum Einpressen des Endabschnitts 4 in die Vertiefung 5 aufzubringen, wird ein mit der Zylinderstange 16 verbundener, insbesondere verschraubter Presskeil 17 in Richtung des Pfeils 13 verschoben, ein entsprechender radial nach innen gerichteter Druck auf den Presskegel 11 aufgebracht wird, durch welchen der freie Endabschnitt 4 in die Vertiefung 5 eingepresst wird. Mit 18 ist in Fig. 4 hierbei der maximale Hub der Zylinderstange 16 angedeutet.

In Fig. 5 ist eine weitere Variante einer Vorrichtung zum Verpressen der Rohre 3 und 1 dargestellt. Bei der Variante gemäß Fig. 5 ist wiederum der freie Endabschnitt 4 des als Muffenende ausgebildeten Rohrs 3 so weit über den als Spitzende 2 ausgebildeten Endbereich des Rohrs 1 aufgeschoben, bis das freie Ende 9 des Rohrs 3 in Anschlag an den Schenkel 10 der Vertiefung 5 gelangt. Zum Verpressen des freien Endabschnitts 4 in die Vertiefung 5 wird bei der Ausbildung gemäß Fig. 5 die den Presskegel 11 aufweisende Spreizhülse 15 durch Verschieben des Presskeils 17 in Richtung des Pfeils 19 druckbelastet. Durch ein Verschieben in Richtung des Pfeils 19 wird der auf den Presskegel 11 aufgebrachte Druck soweit erhöht bis der freie Endabschnitt 4 des Rohrs 3 in die Vertiefung 5 des Rohrs 1 eingepresst wird.
Auch bei der Variante gemäß Fig. 5 ist der Presskeil 17 mit der Kolbenstange 16 verbunden.

Schließlich ist in Fig. 6 ein Detail der Rohrverbindung sowie schematisch ein Teil der Spreizhülse 15, welche den Presskegel 11 aufweist, dargestellt. Indem der Presskegel 11 genau auf den Endabschnitt 4 des Rohrs 3 wirkt, wird der Endabschnitt 4 des Rohrs 3, welcher Sollbiegestellen 20, die in Form von Nuten bzw. Rillen 21 ausgebildet sind, aufweist, in die Vertiefung 5 des als Spitzende 2 ausgebildeten Rohrendabschnitts des Rohrs 1 eingepresst. Aufgrund des Vorsehens der Sollbiegestellen 20, die als Nuten bzw. Rillen 21 ausgebildet sind, gelingt es hiebei, den Endabschnitt 4 exakt in Anlage an die Form der Vertiefung 5 zu bringen, ohne dass der Endabschnitt 4 des Rohrs 3 in irgendeiner Weise beschädigt wird, wodurch eine sichere und zuverlässige Rohrverbindung zur Verfügung gestellt werden kann.

Durch Ausbildung des als Spitzende 2 ausgebildeten Bereichs des Rohrs 1 in Form eines sich in Richtung zum Rohrinneren verjüngenden Konus ist darüber hinaus eine gewisse Beweglichkeit der Rohrverbindung sichergestellt, so dass ohne jede Beschädigung der Rohre 1, 3 eine Anpassung der Rohrverbindung an Geländeverschiebungen und dgl. mit Sicherheit gewährleistet ist.

## Patentansprüche

1. Hüllrohrverbindung zwischen einem ersten Rohr (1) und einem zweiten Rohr (3), wobei ein Endabschnitt des ersten Rohrs (1) als Spitzende (2) ausgebildet ist und von einem als Muffenende ausgebildeten Endabschnitt (4) des zweiten Rohrs (3) übergriffen ist, wobei das Spitzende (2) einen gegenüber dem Rohrumfang verringerten Durchmesser aufweist, wobei an dem vom Rohrende abgewandten Endbereich des Spitzendes (2) eine sich wenigstens über einen Teilbereich des Umfangs des Spitzendes (2) erstreckende Vertiefung (5) ausgebildet ist, und wobei das in das Muffenende des zweiten Rohrs (3) ragende Spitzende (2) des ersten Rohrs (1) einen sich konisch verjüngenden Endabschnitt (14) aufweist, **dadurch gekennzeichnet, dass** der sich konisch verjüngende freie Endabschnitt (14) des Spitzendes des ersten Rohrs einen Konuswinkel von 0,8 bis 1,5° aufweist, und ein von dem freien Ende des Spitzendes (2) abgewandter Schenkel (10) der Vertiefung (5) als Anschlag für das freie Ende (9) des als Muffenende ausgebildeten Endabschnitts (4) des zweiten Rohrs beim Einschieben des Spitzendes (2) des ersten Rohrs (1) in das Muffenende des zweiten Rohrs (3) ausgebildet ist.

2. Hüllrohrverbindung nach Anspruch 1, **dadurch gekennzeichnet, dass** die Vertiefung (5) als symmetrische oder asymmetrische U-förmige oder symmetrische oder asymmetrische V-förmige Vertiefung ausgebildet ist.

3. Hüllrohrverbindung nach Anspruch 2, **dadurch gekennzeichnet, dass** die Schenkel der symmetrischen oder asymmetrischen, U-förmigen Vertiefung (5) mit der Basis der U-förmigen Vertiefung jeweils einen stumpfen Winkel einschließen oder die Schenkel der symmetrischen oder asymmetrischen V-förmigen Vertiefung einen stumpfen Winkel miteinander einschließen.

4. Hüllrohrverbindung nach Anspruch 1, 2 oder 3, **dadurch gekennzeichnet, dass** der als Muffenende ausgebildete Endabschnitt (4) des zweiten Rohrs (3) wenigstens eine, insbesondere zwei Sollbiegestelle(n) (20) aufweist.

5. Hüllrohrverbindung nach Anspruch 4, **dadurch gekennzeichnet, dass** die Sollbiegestelle(n) (20) als Materialverjüngungen, Nuten, Rillen (21) oder dgl. ausgebildet sind.

6. Hüllrohrverbindung nach Anspruch 4 oder 5, **dadurch gekennzeichnet, dass** wenigstens eine Sollbiegestelle (20) am Innenumfang des als Muffenende ausgebildeten Endabschnitts (4) des zweiten Rohrs (3) ausgebildet ist und dass die wenigstens eine Sollbiegestelle (20) um den mittleren Durchmesser der Vertiefung von dem freien Ende (9) des Muffenendes beabstandet ist.

7. Hüllrohrverbindung nach Anspruch 4 oder 5, **dadurch gekennzeichnet, dass** wenigstens eine weitere Sollbiegestelle (20) an einem Außenumfang des als Muffenende ausgebildeten Endabschnitts (4) des zweiten Rohrs (3) ausgebildet ist und dass diese weitere wenigstens eine Sollbiegestelle (20) in Richtung zum freien Ende des Muffenendes versetzt von der wenigstens einen ersten Sollbiegestelle (20) ausgebildet ist.

## Claims

1. A jacket pipe connection between a first pipe (1) and a second pipe (3), wherein an end portion of the first pipe (1) is designed as a pointed end (2) and overlapped by an end portion (4) of the second pipe (3), which end portion (4) is designed as a sleeve end, wherein the pointed end (2) has a diameter reduced relative to the pipe circumference, wherein a depression (5) extending at least over a partial region of the circumference of the pointed end (2) is formed in the end portion facing away from the pipe end, of the pointed end (2), and wherein the pointed end (2) of the first pipe (1), which projects into the sleeve end of the second pipe (3), comprises a conically tapering end portion (14), **characterized in that** the conically tapering end portion (14) of the pointed end of the first pipe has a cone angle of 0.8 to 1.5°, and a leg (10) facing away from the free end of the pointed end (2), of the depression (5) is designed as a stop for the free end (9) of the end portion (4) designed as a sleeve end, of the second pipe, with the pointed end (2) of the first pipe (1) inserted in the sleeve end of the second pipe (3).

2. A jacket pipe connection according to claim 1, **characterized in that** the depression (5) is designed as a symmetrical or asymmetrical U-shaped, or symmetrical or asymmetrical V-shaped, depression.

3. A jacket pipe connection according to claim 2, **characterized in that** the legs of the symmetrical or asymmetrical U-shaped depression (5) each enclose an obtuse angle with the base of the U-shaped depression, or the legs of the symmetrical or asymmetrical V-shaped depression enclose an obtuse angle with each other.

4. A jacket pipe connection according to claim 1, 2 or 3, **characterized in that** the end portion (4) designed as a sleeve end, of the second pipe (3) comprises at least one, in particular two, predetermined bending point(s) (20).

5. A jacket pipe connection according to claim 4, **characterized in that** the predetermined bending point(s) (20) are designed as material tapers, grooves, flutes (21) or the like.

6. A jacket pipe connection according to claim 4 or 5, **characterized in that** at least one predetermined bending point (20) is formed on the inner circumference of the end portion (4) designed as a sleeve end, of the second pipe (3), and that the at least one predetermined bending point (20) is spaced apart from the free end (9) of the sleeve end by the mean diameter of the depression.

7. A jacket pipe connection according to claim 4 or 5, **characterized in that** at least one further predetermined bending point (20) is formed on an outer circumference of the end portion (4) designed as a sleeve end, of the second pipe (3), and that said at least one further predetermined bending point (20) is formed to be offset from the at least one first predetermined bending point (20) in the direction to the free end of the sleeve end.

## Revendications

1. Raccord de tuyau à gaine entre un premier tuyau (1) et un second tuyau (3), dans lequel une section d'extrémité du premier tuyau (1) est conformée en extrémité pointue (2) et est recouverte par une section d'extrémité (4) du second tuyau (3) conformée en extrémité de manchon dans lequel l'extrémité pointue (2) présente un diamètre diminué par rapport à la périphérie de tuyau, dans lequel une cavité (5) s'étendant au moins sur une zone partielle de la périphérie de l'extrémité pointue (2) est conformée sur la zone d'extrémité de l'extrémité pointue (2) opposée à l'extrémité de tuyau, et dans lequel l'extrémité pointue (2) faisant saillie dans l'extrémité de manchon du second tuyau (3) du premier tuyau (1) présente une section d'extrémité (14) se rétrécissant de manière conique, **caractérisé en ce que** la section d'extrémité (14) libre se rétrécissant de manière conique de l'extrémité pointue du premier tuyau présente un angle de cône de 0,8 à 1,5°, et une branche (10) opposée à l'extrémité libre de l'extrémité pointue (2) de la cavité (5) est conformée en butée pour l'extrémité libre (9) de la section d'extrémité (4) du second tuyau conformée en extrémité de manchon lors de l'insertion de l'extrémité pointue (2) du premier tuyau (1) dans l'extrémité de manchon du second tuyau (3).

2. Raccord de tuyau à gaine selon la revendication 1, **caractérisé en ce que** la cavité (5) est conformée en cavité en forme de U symétrique ou asymétrique ou en forme de V symétrique ou asymétrique.

3. Raccord de tuyau à gaine selon la revendication 2, **caractérisé en ce que** les branches de la cavité (5) en forme de U, symétrique ou asymétrique, forment à chaque fois avec la base de la cavité en forme de U un angle obtus ou les branches de la cavité en forme de V symétrique ou asymétrique forment un angle obtus entre elles.

4. Raccord de tuyau à gaine selon la revendication 1, 2 ou 3, **caractérisé en ce que** la section d'extrémité (4) du second tuyau (3) conformée en extrémité de manchon présente au moins un, en particulier deux, lieux de flexion de consigne (20).

5. Raccord de tuyau à gaine selon la revendication 4, **caractérisé en ce que** les lieux de flexion de consigne (20) sont conformés en rétrécissements de matériau, rainures, cannelures (21) ou similaires.

6. Raccord de tuyau à gaine selon la revendication 4 ou 5, **caractérisé en ce qu'**au moins un lieu de flexion de consigne (20) est conformé sur la périphérie intérieure de la section d'extrémité (4) du second tuyau (3) conformée en extrémité de manchon et que l'au moins un lieu de flexion de consigne (20) est espacé du diamètre médian de la cavité de l'extrémité libre (9) de l'extrémité de manchon.

7. Raccord de tuyau à gaine selon la revendication 4 ou 5, **caractérisé en ce qu'**au moins un autre lieu de flexion de consigne (20) est conformé sur une périphérie extérieure de la section d'extrémité (4) du second tuyau (3) conformée en extrémité de manchon et que cet autre au moins un lieu de flexion de consigne (20) est conformé en direction de l'extrémité libre de l'extrémité de manchon décalée de l'au moins un premier lieu de flexion de consigne (20).
